# EUROPEAN PATENT APPLICATION

(11) **EP 4 549 785 A1**
(43) Date of publication of application: **07.05.2025**
(21) Application number: 24208024.0
(22) Date of filing: 22.10.2024
(51) Int. Cl.: F16K 11/085, F16K 5/04, F16K 5/12

(54) **ROTARY VALVE**

(30) Priority: 30.10.2023 JP 2023185950
(71) Applicant: Aisin Corporation, Aichi 448-8650 (JP)
(72) Inventor: OSUKA, Shinya, Kariya, 448-8650 (JP); ISHII, Masato, Kariya, 448-8650 (JP)
(74) Representative: Winter, Brandl - Partnerschaft mbB

(57) **Abstract**

A rotary valve (100) includes: a rotor (2) that includes a cylindrical rotor body having a rotor opening through which a fluid flows and that rotates about an axis; and a seal member (4) that is disposed along a circumferential direction of the rotor body. The rotor body includes two facing portions (211a) that face each other in the circumferential direction among edge portions forming the rotor opening. The seal member includes a seal body (41) that is disposed on an outer side with respect to the rotor body in a radial direction and in which a seal opening (41H) communicating with the rotor opening is formed, and an inner annular rib (422) that surrounds the seal opening and that protrudes from the seal body toward an inner side in the radial direction. The inner annular rib includes an inclined rib portion (422b) that forms an acute angle with the facing portions.

## Description

### TECHNICAL FIELD

This disclosure relates to a rotary valve.

### BACKGROUND DISCUSSION

In the specification of CN218582336 (Reference 1), a multi-channel valve that can implement switching among a plurality of flow paths and is intended to improve a sealing performance between the channels is disclosed. The multi-channel valve disclosed in Reference 1 includes a housing, a valve body, and a first seal member, and the valve body is rotatably provided in a valve chamber provided in the housing. The switching flow paths provided in the valve body communicate with fluid flow paths provided in the housing, and the first seal member is provided in the valve chamber so as to surround an outer periphery of the valve body. The first seal member is provided such that first avoiding through holes are spaced apart from each other along a circumferential direction and correspond to the fluid flow paths. The valve body is in contact with ribs provided on the first seal member. The ribs include a first rib extending along a rotation axial direction of the valve body and a second rib extending along the circumferential direction of the valve body. The first rib and the second rib intersect with each other to form grid-like ribs, and peripheral edges of the switching flow path are surrounded by the ribs.

As disclosed in Reference 1, when the first rib is provided parallel to the rotation axial direction of the valve body, that is, orthogonal to the circumferential direction, a rotational torque when the valve body climbs over the ribs increases, and a sliding resistance of the valve body increases. When the sliding resistance of the valve body increases, there are concerns such as energy loss and deterioration of durability of a seal member. Therefore, a rotary valve capable of reducing the sliding resistance is desired.

A need thus exists for a rotary valve capable of reducing a sliding resistance.

### SUMMARY

A rotary valve disclosed here is characterized in that, the rotary valve includes: a rotor that includes a cylindrical rotor body having a rotor opening through which a fluid flows and that rotates about an axis; and a seal member that is disposed along a circumferential direction of the rotor body. The rotor body includes two facing portions that face each other in the circumferential direction in an edge portion forming the rotor opening. The seal member includes a seal body that is disposed on an outer side with respect to the rotor body in a radial direction and in which a seal opening communicating with the rotor opening is formed, and an inner annular rib that surrounds the seal opening and that protrudes from the seal body toward an inner side in the radial direction. The inner annular rib includes an inclined rib portion that forms an acute angle with the facing portions.

According to this configuration, the inclined rib portion provided in the inner annular rib that surrounds the seal opening is inclined to form the acute angle with the facing portions that face each other in the circumferential direction in the edge portion forming the rotor opening. That is, the rotor body gradually rides on the inclined rib portion during rotation, and a peak of a rotational torque of the rotor can be reduced. Accordingly, a sliding resistance of the rotor can be reduced.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a longitudinal sectional view showing a configuration of a rotary valve according to an embodiment;
Fig. 2 is a perspective view showing a rotor according to the embodiment;
Fig. 3 is an enlarged view of a rotor opening shown in Fig. 2;
Fig. 4A is a schematic view showing a cross section along IVA-IVA shown in Fig. 3;
Fig. 4B is a schematic view showing a cross section along IVB-IVB shown in Fig. 3;
Fig. 5 is a view showing a part of an outer side of a seal member in a radial direction according to the embodiment;
Fig. 6 is a view showing a part of an inner side of the seal member in the radial direction according to the embodiment;
Fig. 7 is a view showing the rotor opening and a seal opening according to the embodiment;
Fig. 8A is a view showing an inner axial rib and a steeply inclined portion according to the embodiment;
Fig. 8B is a view showing the inner axial rib and the steeply inclined portion according to the embodiment;
Fig. 8C is a view showing the inner axial rib and the steeply inclined portion according to the embodiment;
Fig. 9A is a view showing the inner axial rib and a gently inclined portion according to the embodiment;
Fig. 9B is a view showing the inner axial rib and the gently inclined portion according to the embodiment;
Fig. 9C is a view showing the inner axial rib and the gently inclined portion according to the embodiment;
Fig. 10 is a graph showing a change in a rotational torque with respect to a rotational angle of the rotor according to the embodiment;
Fig. 11 is a perspective view showing a rotor according to another embodiment; and
Fig. 12 is a view showing a part of an inner side of a seal member in a radial direction according to another embodiment.

### DETAILED DESCRIPTION

Hereinafter, a rotary valve according to embodiments disclosed here will be described with reference to the drawings. However, this disclosure is not limited to the following embodiments, and various modifications can be made without departing from the gist of this disclosure.

### Rotary Valve

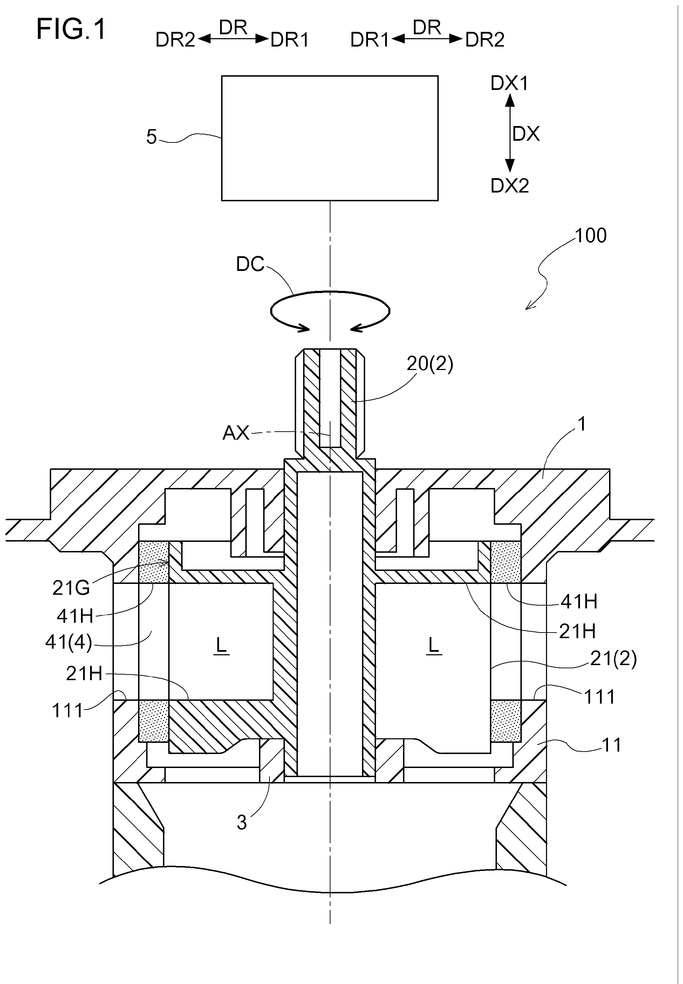

Fig. 1 shows a cross section of a rotary valve 100 taken along an axis AX. In the embodiment, the rotary valve 100 is used for controlling a fluid flowing to a cooling target device such as a battery or a motor mounted on a vehicle such as an automatic vehicle. The fluid is cooling water such as a long-life coolant (LLC). The fluid may be an insulating oil of paraffin-based and the like, or a refrigerant such as hydrofluorocarbon (HFC) or hydrofluoroolefin (HFO).

As shown in Fig. 1, the rotary valve 100 includes a rotor 2 accommodated in a housing 1, a bush 3 rotatably supporting the rotor 2, a seal member 4 disposed between the housing 1 and the rotor 2, and an actuator 5 connected to the rotor 2. The actuator 5 transmits a rotational force to the rotor 2. When the rotational force is transmitted from the actuator 5, the rotor 2 rotates about the axis AX, and a flow of the fluid is controlled.

Hereinafter, a direction along the axis AX of the rotor 2 is referred to as an "axial direction DX", a circumferential direction of the rotor 2 is referred to as a "circumferential direction DC", and a radial direction of the rotor 2 is referred to as a "radial direction DR". A side of the rotor 2 in the axial direction DX on which the actuator 5 is disposed is referred to as an "axial direction first side DX1", and an opposite side thereof is referred to as an "axial direction second side DX2". Further, an inner side in the radial direction DR is referred to as a "radial direction inner side DR1", and the opposite side thereof is referred to as a "radial direction outer side DR2".

### Housing

The housing 1 includes a housing wall portion 11 that defines a space in which the rotor 2 is accommodated. A plurality of ports 111 are formed in the housing wall portion 11 along the circumferential direction DC. The plurality of ports 111 are disposed at a predetermined interval and are connected to different external flow paths. The external flow paths are connected to the cooling target device such as a battery or a motor.

### Rotor

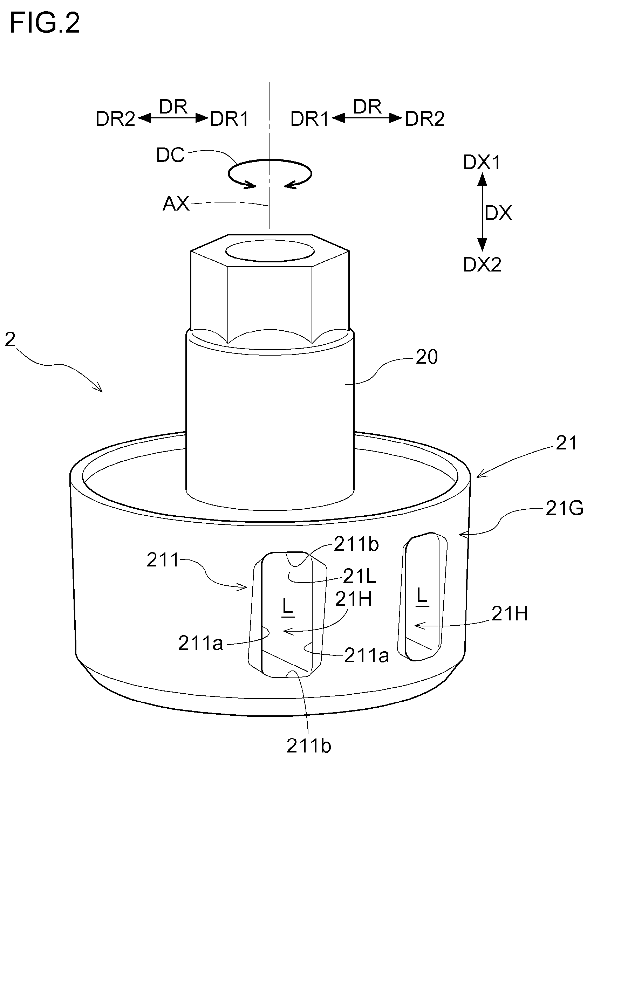

Fig. 2 is a perspective view showing the rotor 2. As shown in Fig. 2, the rotor 2 includes a shaft portion 20 that is coaxial with the axis AX, and a cylindrical rotor body 21 that is rotatable integrally with the shaft portion 20. The rotor 2 is made of a resin and the like, and the shaft portion 20 and the rotor body 21 are integrally formed. In the embodiment, when viewed along the radial direction DR, the rotor body 21 has a tapered shape (truncated cone shape) whose diameter gradually decreases toward the axial direction second side DX2, and a size (length) in the radial direction DR on the axial direction second side DX2 is smaller than on the axial direction first side DX1.

A plurality of rotor openings 21H are formed in an outer peripheral surface 21G of the rotor body 21. The rotor openings 21H communicate with valve flow paths L formed inside the rotor body 21. In the rotor 2 in a predetermined posture, the fluid passes through the rotor openings 21H.

The rotor opening 21H has a substantially rectangular shape when viewed along the radial direction DR. The circumferential direction DC is defined as a lateral direction, and a direction orthogonal to the circumferential direction DC (hereinafter referred to as an "orthogonal direction") among directions along the outer peripheral surface 21G of the rotor body 21 is defined as a longitudinal direction. As described above, since the rotor body 21 is formed in a tapered shape, the orthogonal direction is not strictly parallel to the axial direction DX, and thus the orthogonal direction is described as substantially parallel to the axial direction DX in the following description.

The rotor body 21 includes an edge portion 211 that forms the rotor opening 21H. The edge portion 211 includes two circumferential facing portions 211a (an example of facing portions) facing each other in the circumferential direction DC and two axial facing portions 211b facing each other in the axial direction DX.

The circumferential facing portions 211a are formed by two sides (hereinafter referred to as "circumferential facing sides") which are edges (boundaries) of the rotor opening 21H in the circumferential direction DC of the rotor body 21. Each of the circumferential facing sides extends in the longitudinal direction of the rotor opening 21H.

The axial facing portions 211b are formed by two sides (hereinafter referred to as "axial facing sides") which are edges (boundaries) of the rotor opening 21H in the axial direction DX of the rotor body 21. Each of the axial facing sides extends in the lateral direction of the rotor opening 21H.

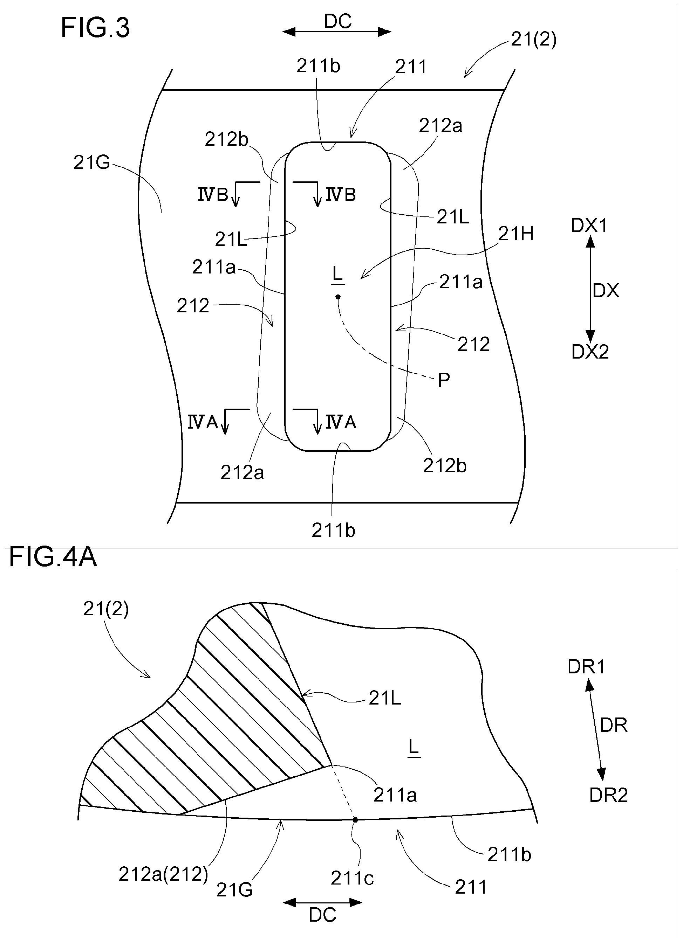

As shown in Fig. 3, a chamfered region 212 chamfered inward in the radial direction DR is formed in each of the circumferential facing portions 211a. Fig. 3 is an enlarged view of the rotor opening 21H shown in Fig. 2.

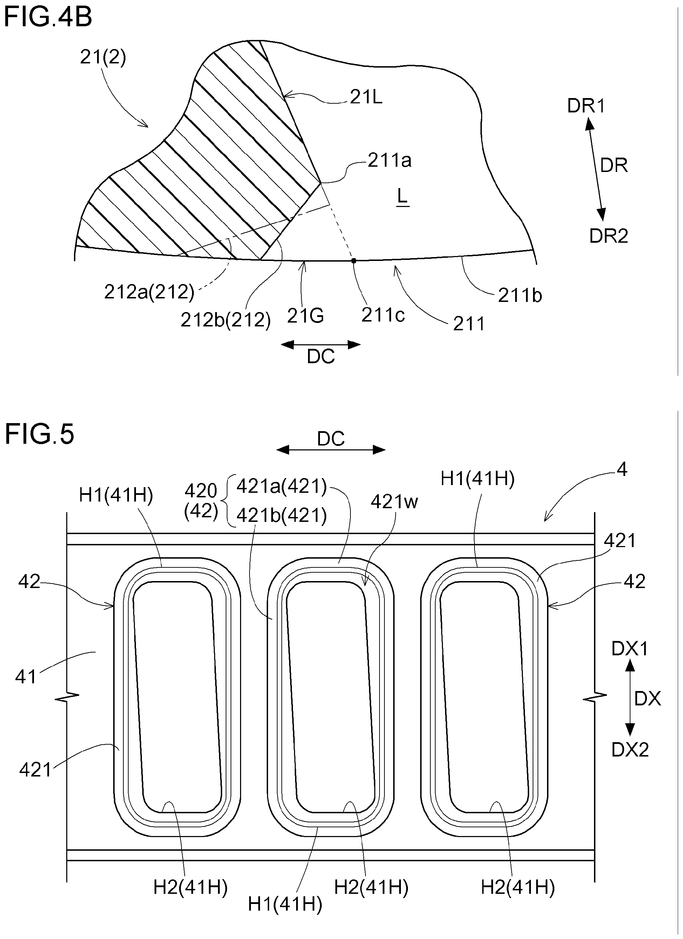

The chamfered region 212 is formed by three-dimensionally chamfering a virtual edge portion 211c and the vicinity thereof shown in Figs. 4A and 4B. The virtual edge portion 211c is an intersection portion between the outer peripheral surface 21G of the rotor body 21 and a flow path wall surface 21L. The flow path wall surface 21L is a surface including the radial direction DR and the substantially axial direction DX (orthogonal direction), and forms the valve flow path L formed inside the rotor body 21. The flow path wall surface 21L is a surface including the circumferential facing sides (circumferential facing portions 211a).

As shown in Fig. 3, the chamfered region 212 includes a gently inclined portion 212a (an example of a second contact portion) and a steeply inclined portion 212b (an example of a first contact portion).

As shown in Figs. 4A and 4B, the steeply inclined portion 212b is chamfered such that a length of the steeply inclined portion 212b in the circumferential direction DC is smaller than that of the gently inclined portion 212a and a length of the steeply inclined portion 212b in the radial direction DR is larger than that of the gently inclined portion 212a. That is, a steeply inclined surface forming the steeply inclined portion 212b is steeper than the gently inclined surface forming the gently inclined portion 212a.

As shown in Fig. 3, the gently inclined portions 212a and the steeply inclined portions 212b are disposed substantially point-symmetrically (or point-symmetrically) with respect to a center P of the rotor opening 21H. The center P is an intersection of diagonal lines of the rotor opening 21H.

The gently inclined portion 212a is disposed downstream of the steeply inclined portion 212b in the rotation direction of the rotor 2. The steeply inclined portion 212b and the gently inclined portion 212a are connected to each other to form a continuous inclined surface. Specifically, the chamfered region 212 is an inclined surface extending from the outer peripheral surface 21G of the rotor body 21 toward the radial direction inner side DR1, and an inclination angle with respect to the outer peripheral surface 21G is different in the circumferential direction DC and the substantially axial direction DX. That is, the chamfered region 212 is gently inclined toward the downstream side in the rotation direction of the rotor 2. The rotor body 21 is rotatable in both a clockwise direction and a counterclockwise direction when viewed along the axial direction DX.

### Seal Member

As shown in Fig. 1, the seal member 4 is disposed along the outer peripheral surface 21G (circumferential direction DC) of the rotor body 21. The seal member 4 is formed of an elastically deformable member, and is compressed by the housing 1 and the rotor 2 to prevent leakage of the fluid (the flow of the fluid into another flow path). The seal member 4 is made of a rubber such as a nitrile rubber (NBR), a fluoro rubber (FKM), and a urethane rubber (U).

The seal member 4 includes a seal body 41 disposed on the radial direction outer side DR2 with respect to the rotor body 21. The seal body 41 is disposed in a substantially circular ring shape along the outer peripheral surface 21G of the rotor body 21.

The seal body 41 has seal openings 41H that penetrate the seal body 41 and through which the fluid passes. The seal opening 41H can communicate with the rotor opening 21H, and communicates with the rotor opening 21H in the rotor 2 in a predetermined posture.

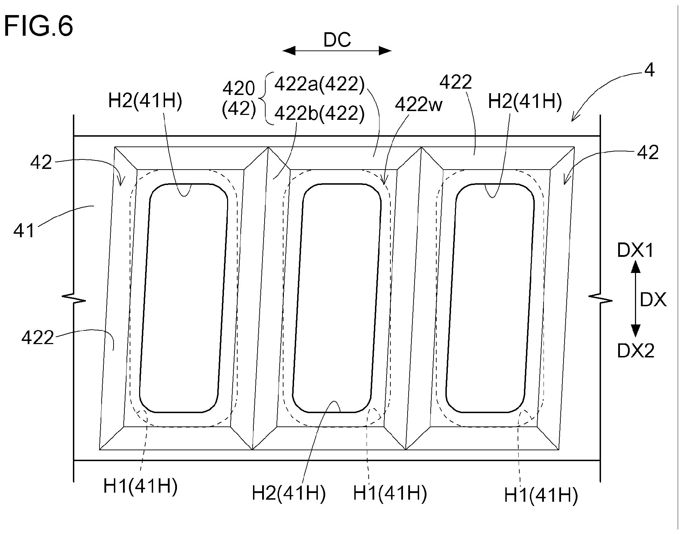

Fig. 5 is a view showing a part of the outer side of the seal member 4 in the radial direction DR. Fig. 6 is a view showing a part of the inner side of the seal member 4 in the radial direction DR. As shown in Figs. 5 and 6, the seal opening 41H includes a first opening H1 formed in a surface (outer surface) on the radial direction outer side DR2 and a second opening H2 formed in a surface (inner surface) on the radial direction inner side DR1. The inner surface of the seal member 4 is a surface of the seal member 4 facing the outer peripheral surface 21G in the radial direction DR along the outer peripheral surface 21G of the rotor body 21, and the outer surface is a surface on the opposite side.

The seal opening 41H is a hole having the first opening H1 and the second opening H2 as ends, and the first opening H1 and the second opening H2 communicate with each other. Hereinafter, the first opening H1 is referred to as an "outer opening H1", and the second opening H2 is referred to as an "inner opening H2".

When viewed along the radial direction DR, the outer opening H1 and the inner opening H2 have different sizes (areas). Specifically, when viewed along the radial direction DR, the outer opening H1 is larger in size (area) than the inner opening H2.

The outer opening H1 and the inner opening H2 also have different shapes. Specifically, the outer opening H1 has a rectangular shape, and the inner opening H2 has a substantially parallel quadrilateral shape (or a parallel quadrilateral shape). The shape and size of the outer opening H1 are designed according to the shape and size of the port 111 (see Fig. 1) formed in the housing wall portion 11, and the shape and size of the inner opening H2 are designed according to the shape and size of the rotor opening 21H.

### Rib

As shown in Figs. 5 to 9, the seal body 41 includes a rib group 42 protruding from the seal body 41 in the radial direction DR. The rib group 42 includes a plurality of annular ribs 420 that surround the seal opening 41H. The annular rib 420 includes an outer annular rib 421 (see Fig. 5) that surrounds the outer opening H1 and an inner annular rib 422 (see Fig. 6) that surrounds the inner opening H2.

### Outer Annular Rib

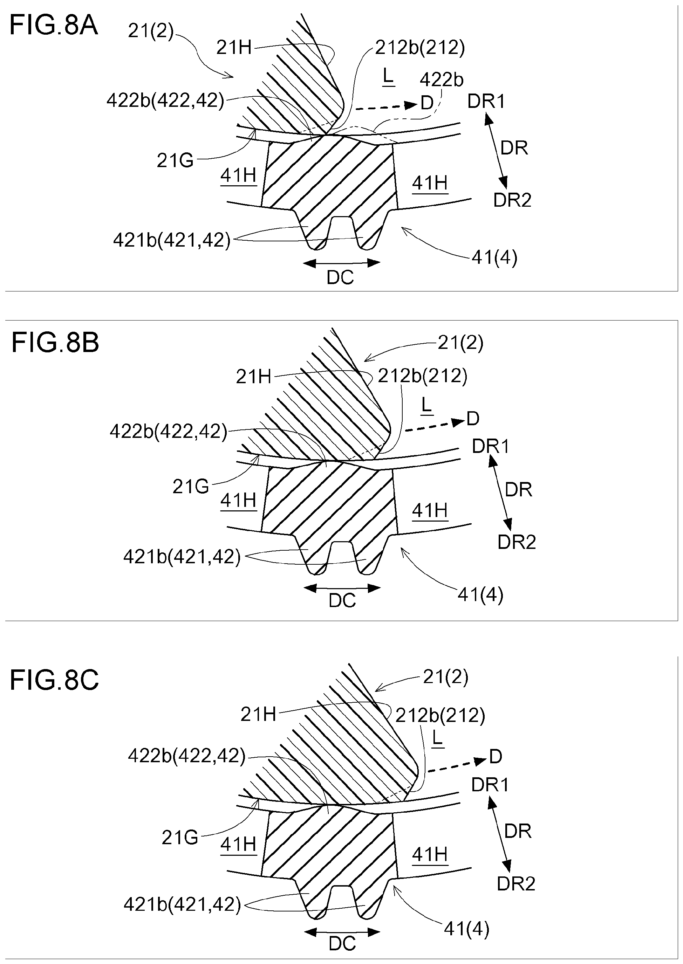

The outer annular rib 421 shown in Fig. 5 protrudes from the seal body 41 toward the radial direction outer side DR2 (see Figs. 8A to 9C). The outer annular rib 421 includes an outer circumferential rib 421a extending along the circumferential direction DC and an outer axial rib 421b extending to intersect with the outer circumferential rib 421a when viewed along the radial direction DR.

The outer circumferential ribs 421a face each other so as to sandwich the outer opening H1 in the longitudinal direction (substantially axial direction DX) of the outer opening H1. The outer axial ribs 421b face each other so as to sandwich the outer opening H1 in the lateral direction (circumferential direction DC) of the outer opening H1. A shape of a first window portion 421w formed by the outer annular rib 421 (an outer edge of the first window portion 421w surrounded by the outer circumferential rib 421a and the outer axial rib 421b) is a rectangular shape, and the first window portion 421w extends in the longitudinal direction (substantially axial direction DX) of the outer opening H1.

### Inner Annular Rib

The inner annular rib 422 shown in Fig. 6 protrudes from the seal body 41 toward the radial direction inner side DR1 (see Figs. 8A to 9C). The inner annular rib 422 includes an inner circumferential rib 422a (an example of an inner circumferential rib portion) extending along the circumferential direction DC and an inner axial rib 422b (an example of an inclined rib portion) extending to intersect with the inner circumferential rib 422a when viewed along the radial direction DR.

The inner circumferential ribs 422a face each other so as to sandwich the inner opening H2 in the longitudinal direction (substantially axial direction DX) of the inner opening H2. The inner axial ribs 422b face each other so as to sandwich the inner opening H2 in the lateral direction (circumferential direction DC) of the inner opening H2. In the embodiment, when viewed along the axial direction DX, the inner axial rib 422b straddles the two outer axial ribs 421b (see Figs. 8A to 9C).

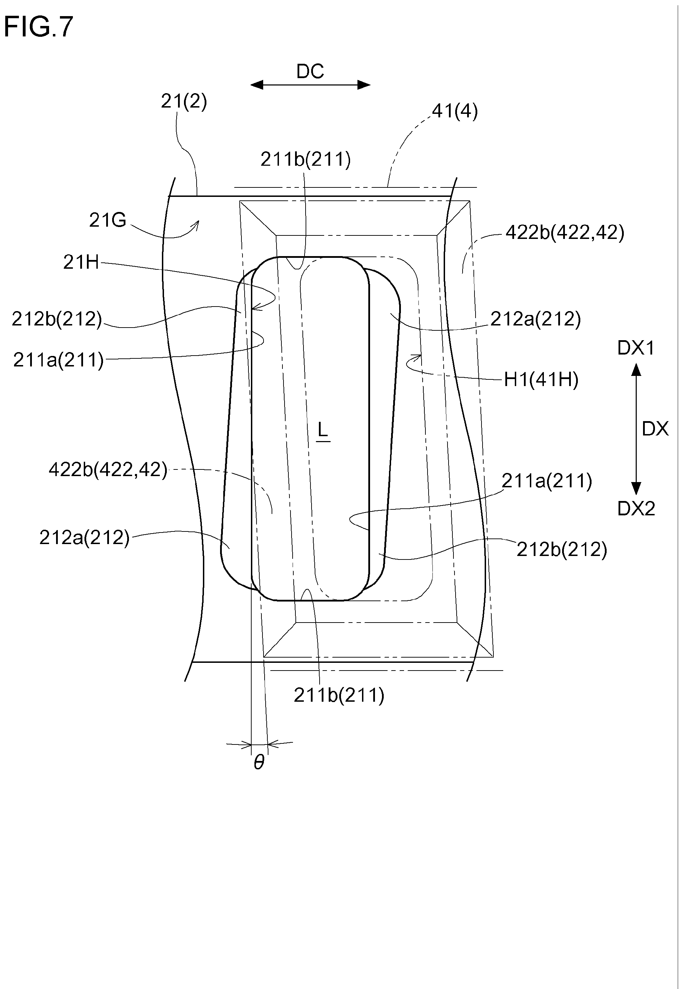

When the seal body 41 is disposed along the outer peripheral surface 21G of the rotor body 21 and the posture of the rotor 2 faces the rotor opening 21H and the seal opening 41H, as shown in Fig. 7, the inner axial rib 422b extends to be inclined with respect to the circumferential facing portion 211a (with reference to the circumferential facing side). Specifically, the inner axial rib 422b extends to form an inclination angle θ with the circumferential facing portion 211a (circumferential facing side). That is, an angle formed by an extending direction of the inner axial rib 422b and the circumferential facing side of the circumferential facing portion 211a (an extending direction of the circumferential facing portion 211a) is the inclination angle θ. The inclination angle θ is an acute angle, and is 1 degree in the embodiment.

That is, as shown in Fig. 6, a shape of a second window portion 422w formed by the inner annular rib 422 (the outer edge of the first window portion 421w surrounded by the inner circumferential rib 422a and the inner axial rib 422b) is a parallel quadrilateral shape.

### Change in Rotational Torque During Rotation of Rotor

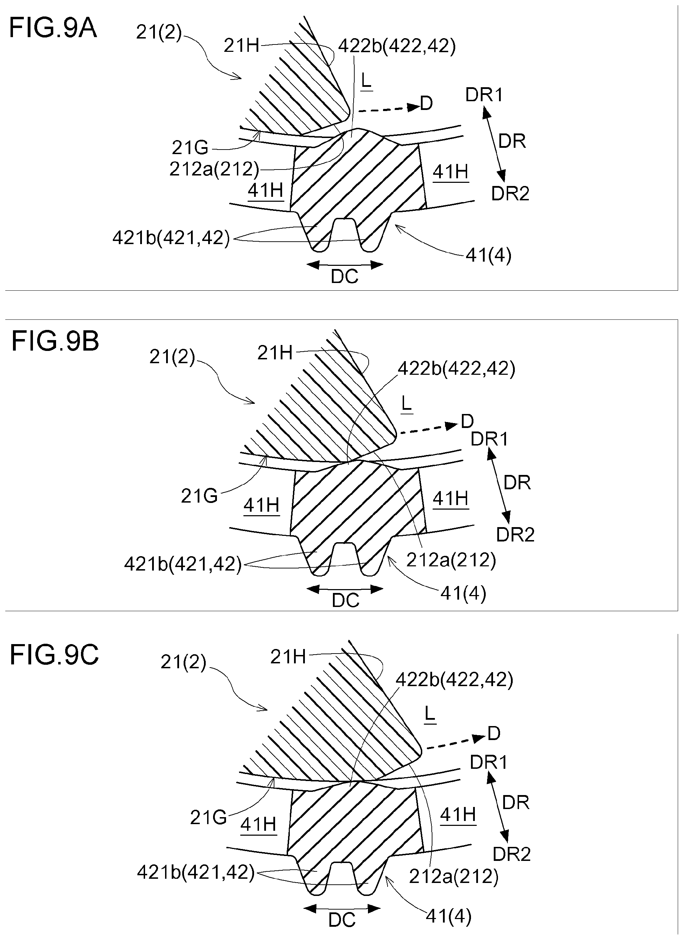

Next, with reference to Figs. 8A to 10, changes in a rotational torque generated when the rotor 2 rotates will be described. Figs. 8A to 9C are views schematically showing a cross section obtained by cutting the seal body 41 in the vicinity of the inner axial rib 422b and the rotor body 21 in the vicinity of the chamfered region 212 along the radial direction DR. Specifically, Figs. 8A to 8C are views schematically showing a cross section obtained by cutting the inner axial rib 422b and the steeply inclined portion 212b of the chamfered region 212, and Figs. 9A to 9C are views schematically showing a cross section obtained by cutting the inner axial rib 422b and the gently inclined portion 212a of the chamfered region 212 along the radial direction DR. Figs. 8A and 9A, Figs. 8B and 9B, and Figs. 8C and 9C respectively show the rotor 2 in the same posture (the same rotational angle), that is, the rotor body 21 and the seal body 41 at the same timing. In Figs. 8A to 9C, the rotor 2 rotates along an arrow D.

As described with reference to Figs. 3 to 4B, the gently inclined portion 212a is disposed downstream of the steeply inclined portion 212b in the rotation direction of the rotor 2. Therefore, the timing of contact with the inner axial rib 422b is different between the gently inclined portion 212a and the steeply inclined portion 212b. Specifically, as shown in Fig. 8A, at the timing when the steeply inclined portion 212b comes into contact with the inner axial rib 422b, as shown in Fig. 9A, the gently inclined portion 212a is not in contact with the inner axial rib 422b, and as shown in Figs. 8B and 9B and Figs. 8C and 9C, the gently inclined portion 212a comes into contact with the inner axial rib 422b of the seal member 4 later than the steeply inclined portion 212b, and climbs over the inner axial rib 422b later than the steeply inclined portion 212b. As described above, since the steeply inclined portion 212b and the gently inclined portion 212a are formed of a continuous inclined surface, the chamfered region 212 gradually climbs over the inner axial rib 422b.

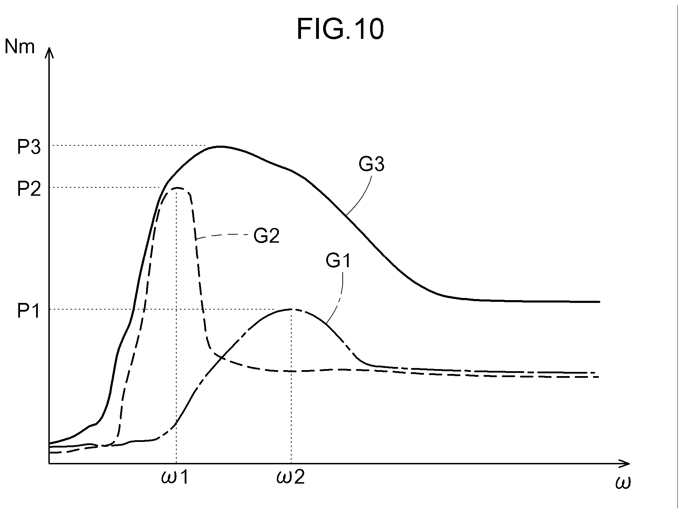

Fig. 10 is a graph schematically showing a rotational torque Nm that changes according to a rotational angle ω of the rotor 2 when the inner axial rib 422b and the chamfered region 212 come into contact with each other. The vertical axis represents the rotational torque Nm of the rotor 2, and the horizontal axis represents the rotational angle ω of the rotor 2.

As described above, the gently inclined portion 212a comes into contact with the inner axial rib 422b later than the steeply inclined portion 212b and climbs over the inner axial rib 422b. Therefore, as shown in Fig. 10, the timing (rotational angle ω2) at which the rotational torque Nm due to the contact between the inner axial rib 422b and the gently inclined portion 212a reaches a peak (first peak value P1) is delayed with respect to the timing (rotational angle ω1) at which the rotational torque Nm due to the contact between the inner axial rib 422b and the steeply inclined portion 212b reaches a peak (second peak value P2).

A one-dot chain line G1 shown in Fig. 10 indicates a change in the rotational torque Nm due to the contact between the inner axial rib 422b and the gently inclined portion 212a. A broken line G2 indicates a change in the rotational torque Nm due to the contact between the inner axial rib 422b and the steeply inclined portion 212b. A solid line G3 is a combination of the one-dot chain line G1 and the broken line G2, and indicates a change in the rotational torque Nm due to the contact between the inner axial rib 422b and the chamfered region 212. Hereinafter, the rotational torque Nm due to the contact between the inner axial rib 422b and the gently inclined portion 212a is referred to as the "rotational torque Nm due to the gently inclined portion 212a", and the rotational torque Nm due to the contact between the inner axial rib 422b and the steeply inclined portion 212b is referred to as the "rotational torque Nm due to the steeply inclined portion 212b".

Since the timing of the first peak value P1 and the timing of the second peak value P2 are different from each other, as indicated by the solid line G3 in Fig. 10, the rotational torque Nm (third peak value P3) due to the contact with the inner axial rib 422b can be reduced when the chamfered region 212 is viewed as a whole.

Since the third peak value P3 is reduced, the change (increase) in the rotational torque Nm until the third peak value P3 is reached can be made gentler. That is, compared to a configuration in which the extending direction of the inner axial rib 422b is parallel to the edge portion 211 (the circumferential facing side) of the rotor opening 21H, the rotational torque Nm at the peak can be reduced, and the change in the rotational torque Nm can be made gentler.

As described with reference to Figs. 4A and 4B, the gently inclined portion 212a is chamfered such that the length of the gently inclined portion 212a in the radial direction DR is smaller than that of the steeply inclined portion 212b. Therefore, as indicated by the one-dot chain line G1 and the broken line G2 in Fig. 10, the first peak value P1 of the rotational torque Nm due to the gently inclined portion 212a is smaller than the second peak value P2 of the rotational torque Nm due to the contact with the steeply inclined portion 212b.

Further, the gently inclined portion 212a is more gently inclined than the steeply inclined portion 212b, and the rotational torque Nm (first peak value P1) due to the gently inclined portion 212a at the peak is smaller than the rotational torque Nm (second peak value P2) due to the steeply inclined portion 212b at the peak. Therefore, as shown in Fig. 10, the change (one-dot chain line G1) in the rotational torque Nm due to the gently inclined portion 212a is gentler than the change (broken line G2) in the rotational torque Nm due to the steeply inclined portion 212b.

On the other hand, since a length of the steeply inclined portion 212b in the radial direction DR is largely chamfered (that is, the second peak value P2 is larger than the first peak value P1) and the steeply inclined portion 212b is steeper than the gently inclined portion 212a, the change in the rotational torque Nm due to the steeply inclined portion 212b is larger (the broken line G2 is larger than the one-dot chain line G1). The steeply inclined portion 212b has a smaller length in the circumferential direction DC than the gently inclined portion 212a, that is, a range of the rotational angle ω of the rotor 2 is small. Therefore, a width of the peak of the rotational torque Nm due to the steeply inclined portion 212b (the range of the rotational angle ω having the second peak value P2) is smaller than a width of the peak of the rotational torque Nm due to the gently inclined portion 212a (the range of the rotational angle ω having the first peak value P1), and the change in the rotational torque Nm due to the steeply inclined portion 212b is larger.

As indicated by the broken line G2 in Fig. 10, a time during which the rotational torque Nm having a relatively large peak value is generated (the range of the rotational angle ω from when the steeply inclined portion 212b rides on the inner axial rib 422b to when the climbing is completed) is relatively small. In addition, as indicated by the one-dot chain line G1 in Fig. 10, a time during which the rotational torque Nm having a relatively small peak value is generated (the range of the rotational angle ω from when the gently inclined portion 212a rides on the inner axial rib 422b to when the climbing is completed) is relatively large. In the embodiment, by combining these, as indicated by the solid line G3 in Fig. 10, the rotational torque Nm (the third peak value P3) can be reduced when the chamfered region 212 is viewed as a whole. In addition, the change in the rotational torque Nm can be reduced. That is, according to the embodiment, compared to a configuration in which the extending direction of the inner axial rib 422b is parallel to the edge portion 211 (the circumferential facing side) of the rotor opening 21H, the rotational torque Nm of the rotor 2 is reduced. As a result, the sliding resistance of the rotor 2 can be reduced.

### Overview of Above Embodiment

In the above embodiment, the following configurations are considered.
(1) The rotary valve 100 includes: the rotor 2 that includes the cylindrical rotor body 21 having the rotor opening 21H through which a fluid flows and that rotates about the axis AX; and the seal member 4 that is disposed along the circumferential direction DC of the rotor body 21. The rotor body 21 includes the two circumferential facing portions 211a (facing portions) that face each other in the circumferential direction DC in the edge portion 211 forming the rotor opening 21H. The seal member 4 includes the seal body 41 that is disposed on the radial direction outer side DR2 with respect to the rotor body 21 and in which the seal opening 41H communicating with the rotor opening 21H is formed, and the inner annular rib 422 that surrounds the seal opening 41H and that protrudes from the seal body 41 toward the radial direction inner side DR1. The inner annular rib 422 includes the inner axial rib 422b (inclined rib portion) that forms an acute angle with the circumferential facing portions 211a (facing portions).
   According to this configuration, the inner axial rib 422b (inclined rib portion) provided in the inner annular rib 422 that surrounds the seal opening 41H is inclined to form an acute angle with the circumferential facing portions 211a (facing portions) that face each other in the circumferential direction DC in the edge portion 211 forming the rotor opening 21H. That is, during rotation, the rotor body 21 gradually rides on the inner axial rib 422b (inclined rib portion), and the timing of riding on (climbing over) the inner axial rib 422b (inclined rib portion) can be partially shifted. Accordingly, the peak of the rotational torque Nm of the rotor 2 can be reduced, and the sliding resistance of the rotor 2 can be reduced.
(2) In the rotary valve 100 according to (1), it is preferable that the inner annular rib 422 further includes the inner circumferential rib 422a extending along the circumferential direction DC, and when viewed along the radial direction DR, a shape formed by the inner circumferential rib 422a (inner circumferential rib portion) and the inner axial rib 422b (inclined rib portion) is a parallel quadrilateral shape.
   According to this configuration, the timing at which the rotor 2 rides on the inner axial rib 422b (inclined rib portion) can be partially shifted. Accordingly, the sliding resistance of the rotor 2 can be reduced.
(3) In the rotary valve 100 according to (1) or (2), it is preferable that the chamfered region 212 chamfered inward in the radial direction DR is formed in the circumferential facing portion 211a (facing portion).
   According to this configuration, the circumferential facing portions 211a (facing portions) that face each other in the circumferential direction DC in the edge portion 211 forming the rotor opening 21H are chamfered inward in the radial direction DR, and thus the sliding resistance of the rotor 2 can be reduced.
(4) In one rotary valve 100 according to (3), it is preferable that the chamfered region 212 includes the steeply inclined portion 212b (first contact portion) that is able to come into contact with the inner axial rib 422b (inclined rib portion), and the gently inclined portion 212a (second contact portion) that is disposed downstream of the steeply inclined portion 212b (first contact portion) in the rotation direction of the rotor 2 and is able to come into contact with the inner axial rib 422b (inclined rib portion) later than the steeply inclined portion 212b (first contact portion), and the steeply inclined portion 212b (first contact portion) is chamfered to have a length in the circumferential direction DC smaller than a length of the gently inclined portion 212a (second contact portion) in the circumferential direction DC and a length in the radial direction DR larger than a length of the gently inclined portion 212a in the radial direction DR.

According to this configuration, since the gently inclined portion 212a (second contact portion) comes into contact with the inner axial rib 422b (inclined rib portion) later than the steeply inclined portion 212b (first contact portion), the rotor body 21 gradually rides on the inner axial rib 422b (inclined rib portion) during rotation. That is, the timing at which the rotor body 21 rides on (climbs over) the inner axial rib 422b (inclined rib portion) can be shifted between the gently inclined portion 212a (second contact portion) and the steeply inclined portion 212b (first contact portion). That is, the timing of the peak of the rotational torque Nm due to the contact between the inner axial rib 422b (inclined rib portion) and the gently inclined portion 212a (second contact portion) can be shifted from the timing of the peak of the rotational torque Nm due to the contact between the inner axial rib 422b (inclined rib portion) and the steeply inclined portion 212b (first contact portion). Accordingly, the peak of the rotational torque Nm of the rotor 2 can be reduced, and the sliding resistance of the rotor 2 can be reduced. The steeply inclined portion 212b (first contact portion) is chamfered such that the length of the steeply inclined portion 212b in the circumferential direction DC is smaller than that of the gently inclined portion 212a (second contact portion) and the length of the steeply inclined portion 212b in the radial direction DR is larger than that of the gently inclined portion 212a. Therefore, the time from when the steeply inclined portion 212b rides on the inner axial rib 422b to when the climbing is completed can be made smaller than the time from when the gently inclined portion 212a rides on the inner axial rib 422b to when the climbing is completed, and the rotational torque Nm when the chamfered region 212 is viewed as a whole can be reduced. As a result, the sliding resistance of the rotor 2 can be reduced.

### Other Embodiments

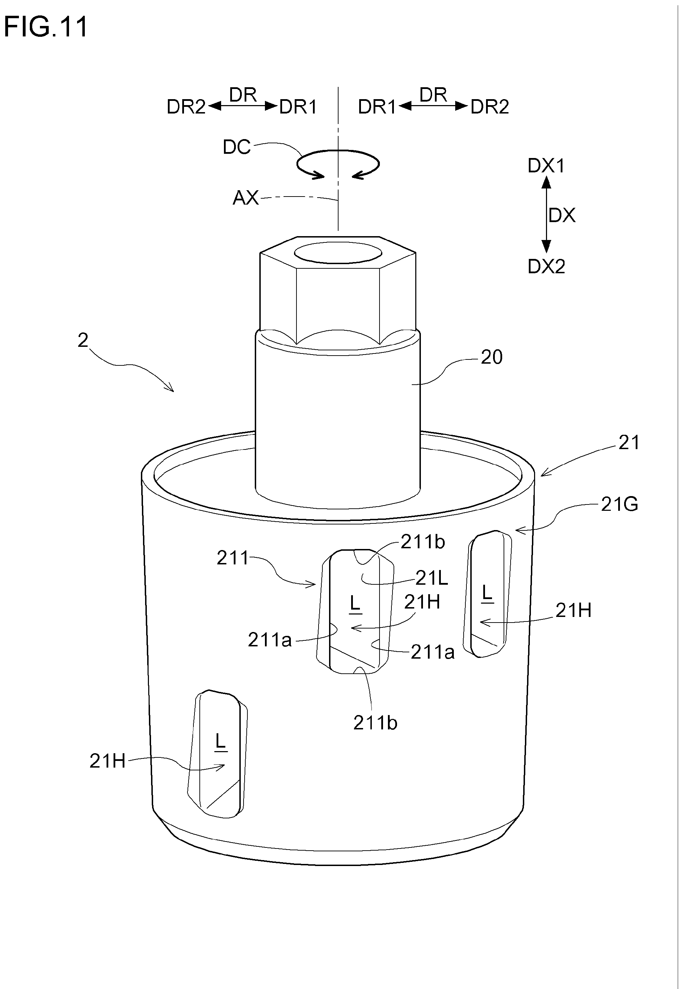

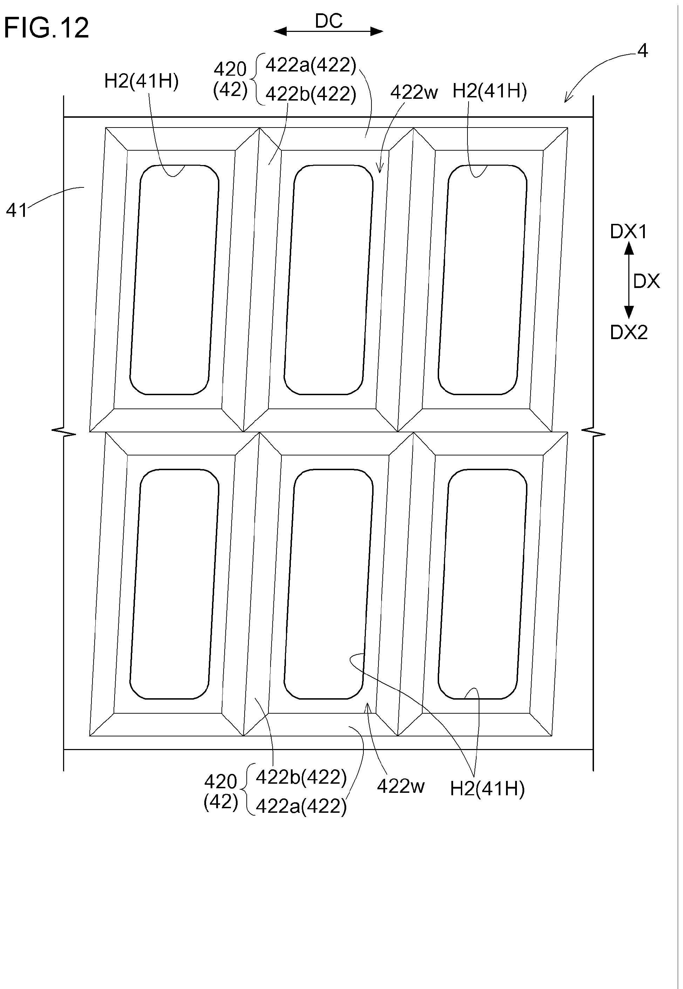

Next, other embodiments will be described.
(1) In the above embodiment, the two inner axial ribs 422b facing each other in the circumferential direction DC are inclined with respect to the circumferential facing portions 211a (circumferential facing sides), but only one inner axial rib 422b may be inclined with respect to the circumferential facing portions 211a (circumferential facing sides). That is, a shape formed by the inner circumferential rib 422a and the inner axial rib 422b may be a trapezoidal shape. When the rotation direction of the rotor 2 is one of the clockwise direction and the counterclockwise direction, it is preferable that only one inner axial rib 422b is inclined with respect to the circumferential facing portions 211a (circumferential facing sides) according to the rotation direction of the rotor 2.
(2) In the above embodiment, the inclination angle θ is 1 degree, but the inclination angle θ is not limited to 1 degree. The inclination angle θ can be appropriately changed as long as a flow path cross-sectional area that does not hinder the flow of the fluid passing through the seal opening 41H can be secured and the sliding resistance of the rotor 2 can be reduced. The inclination angle θ can be appropriately changed within a range of, for example, more than 0 degrees and 5 degrees or less.
(3) In the above embodiment, a configuration in which the gently inclined portion 212a is disposed downstream of the steeply inclined portion 212b in the rotation direction of the rotor 2 has been described as an example. However, the gently inclined portion 212a may be disposed upstream of the steeply inclined portion 212b in the rotation direction of the rotor 2. That is, the chamfered region 212 may be gently inclined toward the upstream side.
(4) In the above embodiment, the steeply inclined portion 212b is chamfered such that the length of the steeply inclined portion 212b in the circumferential direction DC is smaller than that of the gently inclined portion 212a and the length of the steeply inclined portion 212b in the radial direction DR is larger than that of the gently inclined portion 212a. However, the steeply inclined portion 212b may be chamfered such that only the length of the steeply inclined portion 212b in the circumferential direction DC is smaller than that of the gently inclined portion 212a as long as the steeply inclined portion 212b is steeper than the gently inclined portion 212a. Alternatively, the steeply inclined portion 212b may be chamfered such that only the length of the steeply inclined portion 212b in the radial direction DR is larger than that of the gently inclined portion 212a.
(5) In the above embodiment, the chamfered region 212 is formed in the rotor body 21, but the chamfered region 212 may be omitted in the rotor body 21.
(6) In the above embodiment, the inner axial rib 422b straddles the two outer axial ribs 421b, but the inner axial rib 422b may not straddle the two outer axial ribs 421b. A positional relationship between the inner axial rib 422b and the outer axial rib 421b can be appropriately changed as long as a sealing performance of the fluid can be secured. The number of the rib groups 42 can be appropriately changed.
(7) In the above embodiment, the number of the rotor openings 21H formed in the rotor 2 can be appropriately changed according to the number of the ports 111 formed in the housing wall portion 11, the number of switching of the fluid flow path through which the fluid flows, and the like.
(8) In the above embodiment, the rotor body 21 has a tapered shape when viewed along the radial direction DR. However, the rotor body 21 may have a rectangular shape when viewed along the radial direction DR, that is, the rotor body 21 may have a columnar shape. In this case, the orthogonal direction is parallel to the axial direction DX. Expressions such as "parallel", "orthogonal", and the like are not limited to those strictly representing "parallel", "orthogonal", and the like, and may include expressions that can achieve equivalent functions.
(9) As shown in Fig. 11, the rotor 2 may have a two-stage configuration in which two internal flow paths are formed side by side in the orthogonal direction (substantially axial direction DX). In this case, as shown in Fig. 12, it is preferable that the seal member 4 also has a two-stage configuration in which two seal openings 41H are formed along the orthogonal direction (substantially axial direction DX). In the two-stage seal member 4, the two inner axial ribs 422b disposed side by side in the orthogonal direction are disposed such that axes thereof (virtual axes extending in the orthogonal direction) are at different positions in the circumferential direction DC.

### Industrial Applicability

This disclosure can be applied to a rotary valve.

## Claims

1. A rotary valve (100) comprising:
a rotor (2) that includes a cylindrical rotor body having a rotor opening through which a fluid flows and that rotates about an axis; and
a seal member (4) that is disposed along a circumferential direction of the rotor body, wherein
the rotor body includes two facing portions that face each other in the circumferential direction in an edge portion forming the rotor opening,
the seal member includes a seal body that is disposed on an outer side with respect to the rotor body in a radial direction and in which a seal opening communicating with the rotor opening is formed, and an inner annular rib that surrounds the seal opening and that protrudes from the seal body toward an inner side in the radial direction, and
the inner annular rib includes an inclined rib portion that forms an acute angle with the facing portions.

2. The rotary valve according to claim 1, wherein
the inner annular rib further includes an inner circumferential rib portion extending along the circumferential direction, and
when viewed along the radial direction, a shape formed by the inner circumferential rib portion and the inclined rib portion is a parallel quadrilateral shape.

3. The rotary valve according to claim 1 or 2, wherein
a chamfered region chamfered inward in the radial direction is formed in the facing portion.

4. The rotary valve according to claim 3, wherein
the chamfered region includes a first contact portion that is able to come into contact with the inclined rib portion, and a second contact portion that is disposed downstream of the first contact portion in a rotation direction of the rotor and is able to come into contact with the inclined rib portion later than the first contact portion, and
the first contact portion is chamfered to have a length in the circumferential direction smaller than a length of the second contact portion in the circumferential direction and to have a length in the radial direction larger than a length of the second contact portion in the radial direction.
